# NEW EUROPEAN PATENT SPECIFICATION

(11) **EP 1 780 385 B2**
(45) Date of publication and mention of the opposition decision: **15.01.2014**
(45) Mention of the grant of the patent: 26.05.2010
(21) Application number: 06255456.3
(22) Date of filing: 24.10.2006
(51) Int. Cl.: F01N 3/022

(54) **Honeycomb structural body**
Wabenstruktur
Structure en nid d' abeilles

(30) Priority: 25.10.2005 JP 2005309566
(43) Date of publication of application: 02.05.2007
(73) Proprietor: NGK Insulators, Ltd., Nagoya-city, Aichi 467-8530 (JP)
(72) Inventor: Masukawa, Naoshi c/o NGK Insulators Ltd., Nagoya City, Aichi-ken 467-8530 (JP); Ichikawa, Shuichi c/o NGK Insulators Ltd., Nagoya City, Aichi-ken 467-8530 (JP); Watanabe, Atsushi c/o NGK Insulators Ltd., Nagoya City, Aichi-ken 467-8530 (JP)
(74) Representative: Paget, Hugh Charles Edward

(56) References cited:
- EP-A1- 0 816 065
- WO-A1-2005/063653
- US-A1- 2005 266 992

## Description

### BACKGROUND OF THE INVENTION

### Field of the Invention

The present invention relates to a honeycomb structural body comprising a plurality of honeycomb segments unified by bonding. More particularly, the present invention relates to a honeycomb structural body suitably used for catalyst supports and filters which treat exhaust gases or the like.

### Description of the Related Art

A honeycomb structural body is widely used for a catalyst support for an internal combustion engine, a chemical reaction apparatus, and a catalyst support which utilizes a catalyst function for a reformer or the like for a fuel cell, or a capturing filter or the like for diesel particulates, especially.

However, the honeycomb structural body used for these purposes has a problem which may cause a crack or the like in the structural body because of un-uniform heat distribution in the honeycomb structural body by rapid temperature change of the exhaust gas or by the local heat occurrence. Particularly, in the case of the honeycomb structural boy is used as a filter for capturing particulates in the diesel engine exhaust gases (hereinafter, called as DPF(Diesel Particulate Filter)), it is necessary to regenerate the DPF by burning the captured carbon particles such as soot or the like, and at that time cracks may easily occur by big heat stress because the local high temperature rising is unavoidable.

Therefore, a method is proposed, in which a plurality of segments, which are produced by dividing a honeycomb structural body to the plurality of pieces, are bonded by an adhesive agent. However, the honeycomb structural body produced by this method still has an insufficient bonding strength between the honeycomb segments and adhesive layers, and may cause a bonding defect such as occurring the detachment or cracks between the interface between the honeycomb segments and adhesive layers. In order to solve such kind of problems, it is proposed that an under layer or an intermediate layer is provided between the honeycomb segments and the adhesive layers, for improving the bonding strength and relieving the stress (see JP -2001-353976, JP-2001-372907 or JP-2004-322097).

And, in case of using a honeycomb structural body as a catalyst support or a DPF, there are many cases in which a catalyst is provided on the surface of the partition walls of the honeycomb structural body. In this case, the following steps are generally employed, i.e., that steps comprises providing catalyst on the partition wall surfaces or inner part of the partition walls by using a catalyst slurry, then fixing the catalyst on the partition wall surfaces or inner part of the partition walls by heating the honeycomb structural body.

### Summary of the Invention

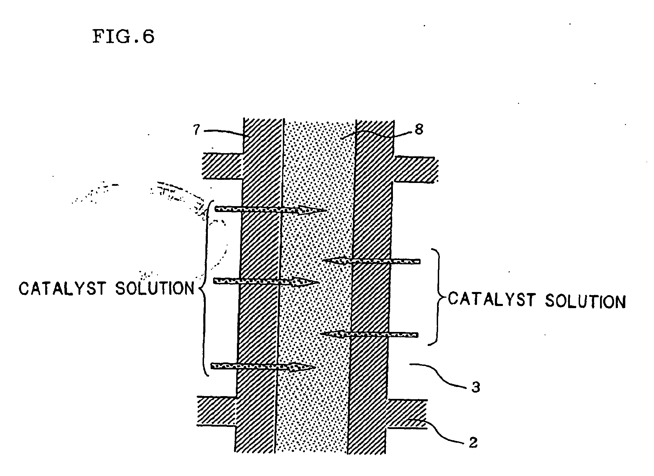

However, it is found that the honeycomb structural body unified a plurality of segments by bonding has a tendency which decreases the durability if the above mentioned catalyst providing steps is employed. The following points are found by the research to clarify the cause thereof. That is, in the process of providing catalyst to the support, a catalyst solution may be used actually in addition to the catalyst slurry, and if the catalyst solution is used, catalyst is fixed at the inner part of the adhesive layer 8 as shown in Fig. 6 because the catalyst solution permeate into the adhesive layer 8 through outer walls 7 with the catalyst which is the solute, and this may increase the modulus of elasticity, then decreasing the stress relieving function of the adhesive layer 8, and the cracks are easily occurred by the thermal shock, and the durability is decreased as the result.

After the repetition of further research, it is found that it is possible to restrain the deterioration of the stress relieving function of the adhesive layer by restraining the permeation of the catalyst solution into the adhesive layer by providing a certain material in the inner part of the outer walls of the honeycomb structural body, between the outer walls and the adhesive layers, or the inner part of the adhesive layer according to the each property, and restraining the increasing the modulus of elasticity after heating.

The present invention has been made based on the above mentioned finding, the honeycomb structural body having increased durability is provided by the restraining the permeation of the catalyst solution into the adhesive layer, in the honeycomb structural body unifying the plurality of honeycomb segments by bonding.

The present invention is to provide a honeycomb structural body as set out in claim 1 or claim 2.

It is possible to restrain the deterioration of the stress relieving function based on the increasing the modulus of elasticity through restraining the permeation of the catalyst solution into the adhesive layer by providing (i) water repellent material, (ii) cation exchange material, (iii) water absorptive material, or (iv) glass phase, as the material or the phase which restrain the permeation of the catalyst material into the adhesive layer through the outer walls, according to the each property. Material (ii) may be provided between said outer walls and said adhesive layers.

### Brief Description of the Drawings

Fig. 1 (a) and Fig. 1 (b) are views of one embodiment of the honeycomb structural body of the present invention, especially, Fig. 1 (a) is an explanatory schematic view, and Fig. 1 (b) is an explanatory plan view.
Fig. 2 is an explanatory schematic view of one embodiment of the segment of the present invention.
Fig. 3 is an explanatory schematic enlarged view of the part III of the Fig. 1 (b).
Fig. 4 is an explanatory schematic enlarged view of another embodiment of the present invention, corresponding part to the Fig. 3.
Fig. 5 (a) is an explanatory schematic view of the other embodiment of the honeycomb structural body of the present invention, and Fig. 5 (b) is the explanatory schematic enlarged view of the part IVb of the Fig. 5 (a).
Fig. 6 is an explanatory schematic enlarged view of a part of a conventional honeycomb structural body.

### Reference Numerals

1: honeycomb structural body, 2: partition wall, 3, 3a, 3b: cell, 7: outer wall, 8: adhesive layer, 9: intermediate layer, 12: honeycomb segment, 46, 48: end face.

### DESCRIPTION OF THE PREFERRED EMBODIMENT

The preferred embodiment for carrying out the present invention is herein below described concretely, but the present invention is not limited to the embodiment described below by any means. And it should be understood that any design changes, improvements and so on are possible according to the skilled person in the art without any deviation from the concept of the present invention. Incidentally, the "section" in the following specification means the perpendicular section to the longitudinal direction (axis direction) of the cell, as far as if not specified contrary.

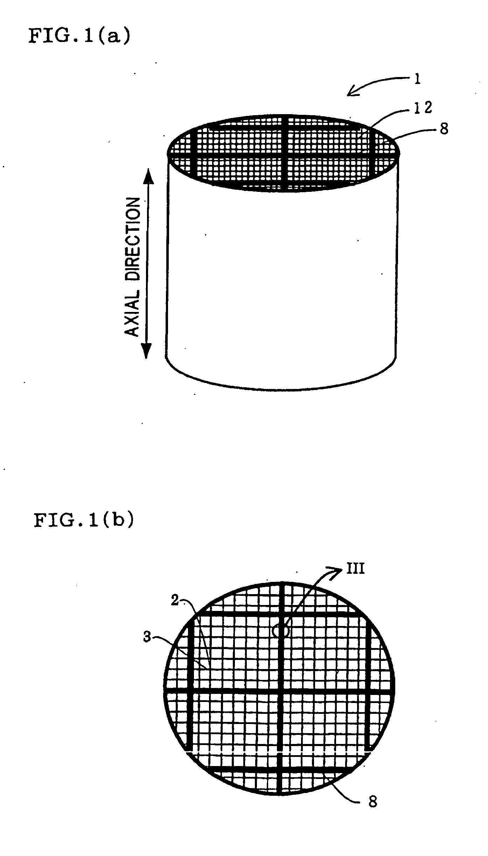

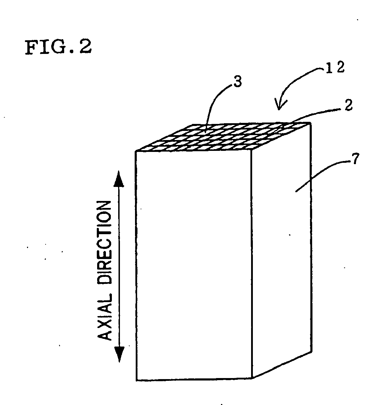

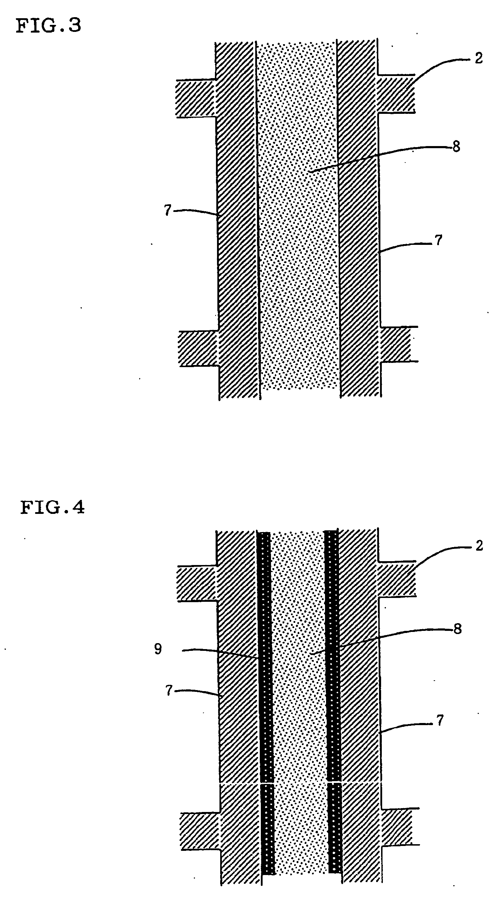

Fig. 1 (a) and Fig. 1 (b) are views of one embodiment of the honeycomb structural body of the present invention, especially, Fig. 1 (a) is an explanatory schematic view, and Fig. 1 (b) is an explanatory plan view. Fig. 2 is an explanatory schematic view of one embodiment of the segment of the present invention. Fig. 3 is an explanatory schematic enlarged view of the part III of the Fig. 1 (b).
The honeycomb structural body 1 shown in the Fig. 1 (a), Fig. 1 (b), Fig. 2 and Fig. 3 possesses a plurality of honeycomb segments 12 having outer walls 7, partition walls 2 which are placed inside of the outer walls 7, and a plurality of cells 3 which are separated by the partition walls 2 and penetrate the segment 12 in an axial direction, and adhesive layers 8 which are arranged between the outer walls 7 of the plurality of honeycomb segments 12 and unifying the honeycomb segments 12 by bonding. And a plurality of honeycomb segments 12 are unified by bonding through the adhesive layers 8.

Fig. 4 is an explanatory schematic enlarged view of another embodiment of the present invention. The honeycomb structural body of the present invention may have an intermediate layer 9 between the outer walls 7 and the adhesive layer 8, as shown in Fig. 4.

Furthermore, the present invention includes at least one material selected from the group consisting of (i) water repellent material, (ii) cation exchange material, (iii) water absorptive material, and (iv) glass phase in the at least one part of inner part of the outer walls 7 of the honeycomb structural body. Material (ii) may be provided between the outer walls 7 and the adhesive layer 8. It is possible to restrain to permeate the catalyst into the inner part of the adhesive layer 8 by including these materials at the appropriate portion according to the each property. Here, as shown in Fig. 4, in case of the honeycomb structural body has the intermediate layer 9, the position between the outer walls 7 and the adhesive layers 8 means any one of the position between the outer walls 7 and the intermediate layer 9, the inner part position of the intermediate layer 9, and the position between the intermediate layer 9 and the adhesive layer 8. Each material or phase (i) through (iv) is explained in more concretely below.

### (i) water repellent material

The water repellent material is possible to restrain the permeation of the catalyst solution into the adhesive layer by existing in the inner part of the outer walls, because the water repellent material has low affinity with the catalyst solution. Therefore, it is possible to reduce the using amount of catalysts in addition to restrain the increase the modulus of elasticity of the adhesive layer by the heating thereafter. The water repellent material exists in the form of stratum layer along the axis of the honeycomb structural body, from the view point of restraining effectively the permeation of the catalyst solution. As the water repellent material, there is no particular limitation of the kinds as far as it shows the water repellency. Silicone oil, pyridinium salts, wax, fatty acid or the like are raised as the example.

As the method for providing the water repellent material into the outer walls, it is possible to raise the method, for example, which comprises shaping the honeycomb segment, permeating the water repellent material into the outer walls, then forming the water repellent phase in the pores of the outer walls or on the inner surfaces of the pores of the outer walls.

### (ii) cation exchange material

Generally, the catalyst in the catalyst solution exists as the form of cation. Therefore, by the existence of the cation exchange material either in the outer walls or between the outer walls and adhesive layers, it is possible to catch the catalyst cation from the permeating catalyst solution, and possible to discharge the cations, i.e. proton or the like, which does not raise the increase of the modulus of elasticity of the adhesive layer, in exchange for. By this, it is possible to restrain the permeation of the catalyst ion into the adhesive layers, and it is also possible to restrain the increase of the modulus of elasticity of the adhesive layers by heating thereafter. It is preferable that the cation exchange material exists in the form of stratum layer along the axis direction of the honeycomb structural body, from the view point of effectively catching the catalyst ion and effectively restraining the permeation of the catalyst ion into the adhesive layers. As the cation exchange material, there is no particular limitation of the kinds as far as it has the general cation exchangeability. As the concrete example, it is possible to raise zeolite, allophane, phenolic resin or the like, and zeolite which contains proton as the exchange cation is most preferable.

As the method for providing the cation exchange material into the outer walls, it is possible to raise the method, for example, which comprises permeating the cation exchange material into the outer walls, then forming the cation exchange phase in the pores of the outer walls or on the inner surfaces of the pores of the outer walls. As the method for providing the cation exchange material between the outer walls and the adhesive layers, it is possible to raise the method, for example, which comprises providing the cation exchange material on the surface of the outer walls, then forming the intermediate layer or the adhesive layers, or which comprises forming the intermediate layers between the outer walls and the adhesive layers, providing the cation exchange material to the surface of the intermediate layers or adding the cation exchange material as the intermediate layer constituent material.

### (iii) water absorptive material

The water absorptive material is possible, by existing in the inner part of the outer walls, to absorb the catalyst solution, to restrain the permeation of the catalyst solution into the adhesive layer, and to restrain the increase the modulus of elasticity of the adhesive layer by the heating thereafter. The water absorptive material exists in the form of stratum layer along the axis direction of the honeycomb structural body, from the view point of effectively restraining the permeation of the catalyst solution into the adhesive layers. As the water absorptive material, there is no particular limitation of the kinds as far as it has the water absorbability. As the concrete example, it is possible to raise the clay minerals such as montmorillonite, saponite, vermiculite, zeolite, or the like, silica gel, or water absorptive polymer. Especially, the clay minerals such as montmorillonite, saponite, vermiculite, zeolite, or the like, is more preferable, because it is possible to catch the catalyst ion into the layers therebetween.

As the method for providing the water absorptive material into the outer walls, it is possible to raise the method, for example, which comprises permeating the water absorptive material into the outer walls, then to dry to form the water absorptive phase in the pores of the outer walls or on the inner surfaces of the pores of the outer walls.

### (iv) glass phase

The glass phase is possible, by existing in the inner part of the outer walls, to restrain the permeation of the catalyst solution into the adhesive layer through the outer walls, and to restrain the increase the modulus of elasticity of the adhesive layer by the heating thereafter. It is preferable that the glass phase exists in the form of stratum layer along the axis direction of the honeycomb structural body, from the view point of effectively restraining the permeation of the catalyst solution into the adhesive layers. As the concrete example of the glass phase, it is possible to raise the glass phase which is constituted by the potassium silicate, sodium silicate, borosilicate glass, frit, several kinds of sol, several kinds of gel, or the like, and it is preferable to raise the glass phase which is constituted by the at least one material selected from that group. Especially, the glass phase which is constituted by at least one material selected from the group consisting of potassium silicate and sodium silicate, from the view point of cost and workability. And as chemical composition of the glass phase, it is preferable to contain at least one material selected from the group consisting of alumina, silica, sodium, and potassium. Incidentally, the glass phase means the material which is possible to recognize as the hollow by the X ray diffraction analysis.

As the method for providing the glass phase into the outer walls, it is possible to raise the method, for example, which comprises permeating the solution or dispersed solution which contains the above mentioned glass phase forming material into the outer walls, then to heat to form the glass phase.

Next, the honeycomb segments will be explained based on the Fig. 2. The honeycomb segment 12 has the outer walls 7, partition walls 2 which are placed inside of the outer walls 7, and a plurality of cells 3 which are separated by the partition walls 2 and penetrate the segment in an axial direction. The partition walls 2 and the outer walls 7 are generally the porous body which works as a filer and/or a catalyst support. And there is a tendency that the problem of the permeation of the catalyst solution to the adhesive layer mentioned_above can be seen frequently at the honeycomb structural body having high porosity. Therefore, the effect of the present invention is remarkable especially on the honeycomb structural body having high porosity. From this point, it is particularly preferable that the application of the present invention to the honeycomb structural body having high porosity. However, having too high porosity is not preferable because the mechanical strength as the honeycomb structural body decreases too much. From these reasons, it is preferable to apply the present invention to the honeycomb structural body having the porosity of the partition walls 2 and the outer walls 7 of the 40-75%, more preferably 50-70%.

There is no particular limitation of the thickness of the partition walls 2 and the outer walls 7, but it is not preferable if the thickness of the partition walls 2 and the outer walls 7 is too big, the pressure loss will be too high at the time the fluid to be treated passes the honeycomb structural body, and it is also not preferable if the thickness of the partition walls 2 or the outer walls 7 is too small, the mechanical strength of the honeycombs structural body will be decreased. From these reasons, the thickness of the partition walls is preferably in the range of 30-2000 µm, more preferably 40-1000 µm, the most preferably 50-500 µm, and the thickness of the outer walls is preferably in the range of 45-3000 µm, more preferably 60-1500 µ m, the most preferably 75-750 µm.

There is no particular limitation for the cell density (number of cells per unit cross-sectional area) of the honeycomb segments 12, the mechanical strength and the effective GSA (geometric surface area) will be insufficient if the cell density is too small, and the pressure loss when the fluid to be treated passes through will be large if the cell density is too large. The cell density is preferably in the range of 6-2000 cells/square inch (0.9-311 cells/cm²), more preferably 50-1000 cells/square inch (7.8-155 cells/cm²), the most preferably 100-400 cells/square inch (15.5-62.0 cells/cm²). Also, there is no particular limitation for the cross sectional configuration of cells (cell configuration), it is preferable to be any one of shape of triangular, quadrangular, hexagonal or corrugate shape from the view point of formability.

Also, there is no particular limitation for the size of the honeycomb segments 12, the breakage damage problems by heat stress will occur if the each segment is too large, and the unification process by bonding will be much complicated if the each segment is too small, therefore too large or too small is not preferable. The preferable size of the cross sectional area of the honeycomb segments is in the range of 900-10000mm², more preferably 900-5000mm², the most preferably 900-3600mm², and also it is preferable that more than 70% in volume of the honeycomb structural body are constituted by the honeycomb segments having these size. Furthermore, there is also no particular limitation for the outer configuration of the honeycomb segments, but the quadrangular shape in the cross section, that is the honeycomb segment is quadrangular column, is to be the basic configuration as shown in Fig. 2 and it is possible to choose appropriately the configuration of the outer side segments which matches to the configuration of the honeycomb structural body unified in total as shown in Fig. 1 (a) and Fig. 1 (b).

As the main constituent of the honeycomb segments, it is possible to consider the several kinds of ceramics such as oxide ceramics or non oxide ceramics, but from the view point of mechanical strength and the heat resistivity it is preferable to being constituted by at least one material selected from the group consisting of cordierite, mullite, alumina, spinel, silicon carbide, complex material of silicon carbide-cordierite system, silicon-silicon carbide system, silicon nitride, lithium aluminum silicate, aluminum titanate, Fe-Cr-Al system metal, and the combination thereof, and silicon carbide or silicon-silicon carbide complex material is suitable from the view point of thermal conductivity and heat durability, cordierite is suitable from the view point of low thermal expansion. Here, the "main constituent" means the constituent constitutes more than 50% by mass of the honeycomb segment, more preferably 70% by mass, and further preferably 80% by mass of the honeycomb segment.

In case of the honeycomb segment 12 has the main constituent of complex material of metal silicon (Si) and silicon carbide (SiC), if the containing amount of Si which is defined by Si / (Si + SiC) is too small, it is difficult to obtain the Si adding effect, and if exceeds 50% by mass, it is difficult to obtain the heat resistivity and the high thermal conductivity which are the characteristic feature of SiC. Therefore, the containing amount of Si is preferably 5-50% by mass, and more preferably 10-40% by mass.

Then, the adhesive layer 8 will be explained with reference to Fig. 1 (a) and Fig. 1 (b). The adhesive layer 8 has the function that bonds each honeycomb segment 12 as well as relieving the stress applied to the honeycomb segments 12. There is no particular limitation of the thickness of the adhesive layer 8, but it is not preferable if it is too thick because the pressure loss will be increased when the fluid to be treated passes the honeycomb structural body 1, and the heat distribution in the honeycomb structural body will be not uniform when the honeycomb structural body is used as the DPF at the time of the soot (smoke particle) regeneration, and the regeneration efficient will be decreased and the cracks are easy to occur by the big thermal stress. Contrary, the thickness of the adhesive layer is too thin, cracks may occur in the honeycomb segment when the honeycomb structural body is actually used because the thermal stress relieving effect of the honeycomb segment will be decreased. Therefore, the thickness of the adhesive layer is preferably 0.1-3.0mm, and more preferably 0.5-2.0mm.

If the modulus of elasticity of the adhesive layer 8 is too high, the stress relieving effect is not sufficient, and it will be difficult to produce the adhesive strength which is durable at the time of practical use, if the modulus of elasticity too low. The modulus of elasticity of the adhesive layer 8 is preferably in the range of 0.05-5GPa, and more preferably 0.1-4GPa. Here, the modulus of elasticity is the value obtained by the three point bending test. If the coefficient of thermal expansion of the adhesive layer 8 is too high, the cracks are easily occurred by the thermal shock and so on, therefore the material having relatively low coefficient of thermal expansion is preferable. The coefficient of thermal expansion in the temperature range of 20-800°C is preferably in the range of 1×10⁻⁶/ °C - 8×10⁻⁶/ °C, more preferably in the range of 1.5×10⁻⁶/ °C - 7×10⁻⁶/ °C, and most preferably in the range of 2.0×10⁻⁶/ °C - 6×10⁻⁶/ °C

The adhesive layer 8 has preferably inorganic material as the main constituent, and it is preferable to be formed by drying, heating and sintering the starting material containing at least one or more than two colloidal sol selected from the group of silica gel or alumina sol or the like, at least one ceramics selected from the group consisting of silicon carbide, silicon nitride, cordierite, alumina, mullite, zirconia, zirconium phosphate, aluminum titanate, titania, and the combination thereof, at least one or more than two of Fe-Cr-Al system metal, nickel metal, or Si metal and SiC or the like inorganic powder, at least one or more than two of inorganic fiber such as ceramic fibers or the like, and inorganic binder.

The colloidal sol is preferable to add adhesiveness, the inorganic powder is preferable to increase the affinity to the outer walls of the honeycomb segments, it is preferable that the inorganic powder has the similar thermal expansion value with the main constituent of the honeycomb segments. And the inorganic fiber is preferable to add toughness (tenacity) appropriately to the adhesive layer.

Then, the intermediate layer 9 which may be provided optionally will be explained in reference to the Fig. 4. The honeycomb structural body may have the intermediate layer 9 for the purpose of improving the bonding strength and relieving the stress between the interface of the outer walls 7 and the adhesive layer 8. Particularly, in the case of the material (ii) mentioned above is provided between the outer walls 7 and the adhesive layer 8, it is preferable to form the intermediate layer 9, and the material (ii) is contained therein.

There is no particular limitation of the thickness of the intermediate layer 9, but if it is too thin, the effect of the intermediate layer 9 will be decreased. The thickness of the intermediate layer 9 is preferably of more than 5 µm, more preferably more than 10 µm, and most preferably more than 30 µm. The maximum thickness of the intermediate layer 9 is preferable of less than the thickness of outer walls 7 from the view point of the effective area of the honeycomb structural body.

There is no particular limitation of the coefficient of thermal expansion of the intermediate layer 9, but if the coefficient of thermal expansion of the intermediate layer 9 differs too much with those of the outer walls 7 and the adhesive layer 8, it is not preferable because the thermal stresses are easily occurred between the each interface. The difference of the coefficient of thermal expansion between the outer walls 7 and the intermediate layer 9 in the temperature range of 20-800°C is preferably not more than 8 × 10⁻⁶/ °C, more preferably not more than 4 × 10⁻⁶/ °C. The difference of the coefficient of thermal expansion between the adhesive layer 8 and the intermediate layer 9 in the temperature range of 20-800°C is preferably not more than 8 × 10⁻⁶/ °C, more preferably not more than 4 × 10⁻⁶/ °C.

To adjust the coefficient of thermal expansion of the intermediate layer 9 to the appropriate range, the intermediate layer 9 preferably has the similar inorganic material as the main constituent with the adhesive layer 8, and it is preferable to form the intermediate layer 9 by selecting the material from the preferable constituent of the adhesive layer 8 mentioned above so that the properties of the intermediate layer 9 is the middle of the outer walls 7 and the adhesive layer 8.

There is no particular limitation of the cross sectional configuration of the honeycomb structural body 1, it is possible to use the polygonal configuration and the variant configuration such as oval, race track, ellipse, triangle, pseudo triangle, quadrangle, pseudo quadrangle, in addition to circular as shown in the Fig. 1 (b).

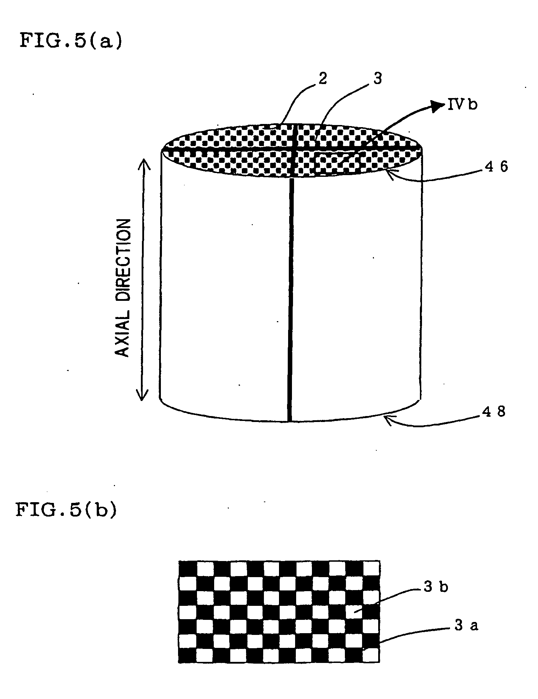

The honeycomb structural body 1 is preferably has the plugged cells, in the case especially used as the DPF, in which one end of the predetermined cells 3 a is plugged at the one end 46 and other cells 3b adjacent to the cells 3a is plugged at the other end of 48 of the honeycomb structural body 1 as shown in Fig. 5 (a) and Fig. 5 (b). Particularly, it is preferable that the adjacent cells are plugged in turn in which both ends 46 and 48 show a kind of chequer flag pattern as shown in Fig. 5 (a) and Fig. 5 (b). By plugging like this, the fluid to be treated which comes into from one end 46 will come out from the other end 48 through the partition walls 2 , then the partition walls 2 work as the filter when the fluid to be treated passes the partition walls 2, it is possible to remove the aimed objects.

As the material for the plug, it is possible to use suitably one or more than two of the ceramics or metals from the materials which are used suitably for the honeycomb segment mentioned above.

As the catalyst which is supported on the honeycomb structural body 1 of the present invention, it is possible to raise the noble metals such as Pt, Pd, Rh or the like, and assistant catalyst represented by the oxides of cerium (Ce) and zirconium (Zr). As the catalyst solution, an acid water solution of these metals is generally used.

The one embodiment of the manufacturing method of the honeycomb structural body will be explained below. In this embodiment, a honeycomb segment 12 is prepared firstly. The honeycomb segment is manufactured by the following steps, for example.

First, a green body is prepared by mixing and kneading the mixture consisting of at least one kinds of ceramics selected from the group consisting of silicon carbide, silicon nitride, cordierite, alumina, mullite, zirconia, zirconium phosphate, aluminum titanate, titania and the combination thereof, Fe-Cr-Al system metal, nickel system metal or a granular material of metal Si and SiC or the like, a binder such as methyl cellulose and hydroxypropoxyl methylcellulose, surfactant and water or the like.

Then this green body is extruded to form a honeycomb structural body in the form of which has a plurality of cells separated by the partition walls and penetrated therethrough in an axis direction. The honeycomb segment 12 shown in Fig. 2 is possible to obtain by drying by micro wave and heated air or the like and by firing the body. The honeycomb segment 12 prepared herein is possible to be formed in the desired outer configuration explained above. In case of providing the above mentioned material or phase (i) through (iv) to the inner part of the outer walls or providing material (ii) on true surface of the outer walls, the material which forms these material or phase is permeated into the outer walls 7 of the honeycomb segment 12 or applied to the surface of the outer walls 7.

Next, providing an adhesive material which forms the adhesive layer on the outer walls of the honeycomb segments, after applying optionally an intermediate layer material which forms the intermediate layer on the outer walls of the honeycomb segments. The composition of the intermediate layer material and adhesive material may contain a organic binder such as methylcellulose, ethylcellulose, carboxyl methylcellulose, polyvynyl alcohol, hydroxypropoxyl methylcellulose or the like, in addition to the appropriate constituents of the intermediate layer and the adhesive layer mentioned above. The intermediate layer material and the adhesive material are preferably in the form of slurry. It is possible that the intermediate layer material and the adhesive material are applied on the outer walls of the honeycomb segments by painting such as spraying, brushing, roller applying or the like, or dipping and the like. In case of providing the material (ii) mentioned above on the surface of the intermediate layer or the inner part of the intermediate layer, the material which forms these material is applied on the surface of the intermediate layer or permeated into the inner part of the intermediate layer, after forming the intermediate layer.

Then, the honeycomb segments are unified by bonding and dried. Thereafter, the unified honeycomb segments may be heat treated by a range of 300-1200°C, preferably 500-1000°C, further preferably 600-800°C. By this heat treatment, it is possible to increase the mechanical strength of the intermediate layer through the forming a bonding structure of the inorganic oxides in the intermediate layer, and it is possible to reduce the pore size in the intermediate layer, and reducing the porosity of the intermediate layer. The time for the heat treatment is preferably 10-180 minutes, and more preferably 20-120 minutes.

Again, in case of using the honeycomb structural body as the filters especially DPF or the like, it is preferable to plug the open ends of the cells 3 in turn, more preferably to plug the end face in turn to form a kind of chequer flag pattern. In this case, it is preferable if the plugging is done after forming the honeycomb segments and before the firing because the firing process is needed only one time, but it is possible to plug after firing, and any timing as far as it is after forming during the manufacturing process of the honeycomb segments. The material for the plug material is preferably selected from the group raised for the preferred material for the honeycomb segments mentioned above, it is preferable to use the same material which is used for the honeycomb segment.

### Example

The present invention will be explained by examples below, but the present invention is not restricted at all by these examples.

### (Examples 1-4, Reference Example 5 and Comparative Example 1)

The plastic green body is obtained by mixing the SiC powder and the metal Si powder in the mass ratio of 80:20 as the starting material, adding starch and foamed resins as the pore forming material, further adding methyl cellulose and hydroxypropoxyl methylcellulose, surfactant and water. The honeycomb segments are obtained, having the thickness of the partition wall of 310 µm, the cell density of 46.5 cells/cm² (300 cells/square inch), the configuration of square of 35mm of one side, and the length of 152mm, by extrusion.

The obtained honeycomb segments are plugged at the each end in which predetermined cells are plugged at one end and the adjacent cells are plugged at the other end so that the end faces of the honeycomb segments shows a kind of chequer flag pattern. Here, the plugging materials are used with the same material which are used for manufacturing the honeycomb segments. The honeycomb segments for the filter having SiC bonded by Si are obtained by drying the plugged honeycomb segments, degreased at the temperature of about 400°C under air atmosphere, and firing at the temperature of 1450°C under Ar inert atmosphere.

The water repellent phase, the cation exchange phase, the water absorptive phase and the glass phase are respectively formed in the pores of the outer walls or on the inner surfaces of the pores of the outer walls by permeating the (i) silicone oil as the water repellent material, (ii) zeolite as the cation exchange material, (iii) montmorillonite as the water absorptive material, and (iv) the dispersed liquid or the solution of potassium silicate as the glass phase to the predetermined outer walls of the honeycomb segments, and drying at the temperature of 110°C

The adhesive materials are prepared by mixing SiC powder as the inorganic powder, aluminosilicate system fiber as the inorganic fiber, silica gel and clay as the inorganic binder, adding water, and kneading them by a mixer for 30 minutes. The 16 pieces of the honeycomb segments are bonded to form a rectangular column by using this adhesive material. And the honeycomb structural body is obtained by machining into the cylindrical column having 143 mm diameter, and coating the outer part of the body by the adhesive material. Here, in the Example 5, the water repellent layer is formed in the adhesive layer by forming the adhesive layer by bonding the honeycomb segments by adhesive material, and permeating the silicone oil into the adhesive layer. Further, in the Comparative Example 1, the honeycomb structural body is obtained by the just same process with the other examples except not using (i) Silicone oil, (ii) zeolite, (iii) montmorillonite, and (iv) the dispersed liquid or the solution of potassium silicate.

The 40% water solution of the cerium nitrate is prepared as the pseudo catalyst solution, and the honeycomb structural body is dipped in this solution. Then catalyst is deposited by drying 30 minutes at 120°C, and heat treated one hour at 550°C. The adhesive portions are cut from these honeycomb structural body, then the permeation of the catalyst constituent is observed by SEM and EDX. And these honeycomb structural bodies are equipped with the diesel engine exhaust pipes, the amount of the limit soot is measured. By the way, the amount of the limit soot means the limit amount of soot which does not generate any damages such as cracks or the like at the time of regenerating of the honeycomb structural body by firing soot, it is obtained by the test which contains the steps of firing the soot after the predetermined amount of soot is accumulated in the honeycomb structural body, observing the existence or not of any damages, then increasing the amount of soot step by step and repeating this test until any damages such as cracks or the like occur in the honeycomb structural body appears.

**Table 1**

| | ornamentation of outer wall of segment | ornamentation of adhesive layer | catalyst permeation to adhesive part | amount of limit soot [g/L] |
|---|---|---|---|---|
| Example 1 | silicone oil | no | no | 11 |
| Example 2 | zeolite | no | no | 11 |
| Example 3 | montmorillonite | no | no | 11 |
| Example 4 | potassium silicate | no | no | 11 |
| Ref. Ex. 5 | none | silicone oil | no | 11 |
| Com.Ex.1 | none | no | yes | 6 |

| | | | | |
|---|---|---|---|---|
| Com.Ex.=Comparative Example Ref. Ex.=Reference Example ouside scope of claims 1 and 2 | | | | |

### (Reference Examples 6 and 8, Example 7 and Comparative Example 2)

The intermediate layer material is prepared by mixing SiC powder, silica gel and clay as the inorganic binder, adding water, and kneading them by a mixer for 10 minutes. Then the intermediate layers having thickness of 50 µm are formed by coating this intermediate layer material by a roller on the outer walls of the honeycomb segments which is obtained by the same process of the Example 1. And the water repellent phase, the cation exchange phase, the water absorptive phase, respectively, are formed on the surface of the intermediate layer by permeating silicone oil, zeolite, and montmorillonite, then drying by 110°C. The honeycomb structural body is prepared by the same process as the Example 1, depositing the pseudo catalyst solution, and then the observation of the catalyst constituent and the measurement of the soot regenerating limit are performed. Incidentally, in the Comparative Example 2, the honeycomb structural bodies are prepared as same process with the Comparative Example 1, and the evaluation is performed.

**Table 2**

| | ornamentation of intermediate surface | ornamentation of adhesive layer | catalyst permeation to adhesive part | amount of limit soot [g/L] |
|---|---|---|---|---|
| Ref. Ex. 6 | silicone oil | no | no | 11 |
| Example 7 | zeolite | no | no | 11 |
| Ref. Ex. 8 | montmorillonite | no | no | 11 |
| Com.Ex.2 | none | no | yes | 6 |

| | | | | |
|---|---|---|---|---|
| Com.Ex.=Comparative Example Ref. Ex.=Reference Example ouside scope of claims 1 and 2 | | | | |

As is understood from the results of Table 1 and Table 2, the durability of the honeycomb structural body are improved through restraining the permeation of the catalyst constituent into the adhesive layer, and through improving the limit amount of soot after catalyst deposition, by providing the water repellent phase, the cation exchange phase, the water absorption phase, or the glass phase in the outer walls or between the outer walls and the adhesive layer, or by providing the water repellent phase in the adhesive layer.

### Industrial Applicability

The honeycomb structural body of the present invention has high durability and is suitably used as the filers just like as the DPF or the like, and the catalyst support. Particularly, it is particularly suitable used as the DPF.

## Claims

1. A honeycomb structural body comprising:
a plurality of honeycomb segments having outer walls, partition walls which are placed inside of the outer walls, and a plurality of cells which are separated by the partition walls and penetrate the segment in an axial direction, and
adhesive layers which are arranged between the outer walls of the plurality of honeycomb segments and unifying the honeycomb segments by bonding,
wherein at least one material selected from the group consisting of following (i) through (iii) is contained within said outer walls:
(i) water repellent material,
(ii) cation exchange material, and
(iii) water absorptive material
or at least one cation exchange material is contained between said outer walls and said adhesive layers,
wherein said at least one material selected from the group consisting of (i) to (iii) is arranged in the shape of stratum.

2. A honeycomb structural body comprising:
a plurality of honeycomb segments having outer walls, partition walls which are placed inside of the outer walls, and a plurality of cells which are separated by the partition walls and penetrate the segment in an axial direction, and
adhesive layers which are arranged between the outer walls of the plurality of honeycomb segments and unifying the honeycomb segments by bonding,
wherein
(iv) glass phase
is contained within said outer walls,
wherein said glass phase is arranged in the shape of stratum.

3. A honeycomb structural body according to claim 1 or claim 2, wherein the predetermined cells are plugged.

4. A honeycomb structural body according to any one of Claims 1 to 3, wherein a catalyst is supported thereon.

## Patentansprüche

1. Wabenstrukturkörper, umfassend:
eine Vielzahl an Wabensegmenten mit Außenwänden, Trennwänden, die innerhalb der Außenwände angeordnet sind, und einer Vielzahl an Zellen, die durch die Trennwände getrennt sind und das Segment in axialer Richtung durchdringen, und
Haftmittelschichten, die zwischen den Außenwänden der Vielzahl an Wabensegmenten angeordnet sind und die Wabensegmente durch haftschlüssiges Verbinden zu einer Einheit zusammenfügen,
worin zumindest ein aus der aus (i) bis (iii) bestehenden Gruppe ausgewähltes Material in den Außenwänden enthalten ist:
(i) wasserabweisendes Material,
(ii) Kationenaustauschmaterial und
(iii) wasserabsorbierendes Material,
oder zumindest ein Kationenaustauschmaterial zwischen den Außenwänden und den Haftmittelschichten enthalten ist,
worin das zumindest eine aus der aus (i) bis (iii) bestehenden Gruppe ausgewählte Material in Schichtform angeordnet ist.

2. Wabenstrukturkörper, umfassend:
eine Vielzahl an Wabensegmenten mit Außenwänden, Trennwänden, die innerhalb der Außenwände angeordnet sind, und eine Vielzahl an Zellen, die durch die Trennwände getrennt sind und das Segment in axialer Richtung durchdringen, und
Haftmittelschichten, die zwischen den Außenwänden der Vielzahl an Wabensegmenten angeordnet sind und die Wabensegmente durch haftschlüssiges Verbinden zu einer Einheit zusammenfügen,
worin
(iv) eine Glasphase
in den Außenwänden enthalten ist,
worin die Glasphase in Schichtform angeordnet ist.

3. Wabenstrukturkörper nach Anspruch 1 oder Anspruch 2, worin die vorbestimmten Zellen verschlossen sind.

4. Wabenstrukturkörper nach einem der Ansprüche 1 bis 6, worin ein Katalysator auf diesen aufgebracht ist.

## Revendications

1. Corps à structure en nid d'abeilles comprenant :
une pluralité de segments de nid d'abeilles comportant des parois extérieures, des parois de séparation qui sont placées à l'intérieur des parois extérieures, et une pluralité de cellules qui sont séparées par les parois de séparation et qui pénètrent dans le segment dans une direction axiale, et
des couches adhésives qui sont agencées entre les parois extérieures de la pluralité de segments de nid d'abeilles et unifiant les segments de nid d'abeilles par collage,
dans lequel au moins un matériau sélectionné dans le groupe consistant en les éléments (i) à (iii) suivants est contenu dans lesdites parois extérieures :
(i) un matériau hydrofuge,
(ii) un matériau d'échange de cations, et
(iii) un matériau absorbant l'eau
ou au moins un matériau d'échange de cations est contenu entre lesdites parois extérieures et lesdites couches adhésives,
dans lequel ledit au moins un matériau sélectionné dans le groupe consistant en les éléments (i) à (iii) est agencé sous la forme d'une strate.

2. Corps à structure en nid d'abeilles comprenant :
une pluralité de segments de nid d'abeilles comportant des parois extérieures, des parois de séparation qui sont placées à l'intérieur des parois extérieures, et une pluralité de cellules qui sont séparées par les parois de séparation et qui pénètrent dans le segment dans une direction axiale, et
des couches adhésives qui sont agencées entre les parois extérieures de la pluralité de segments de nid d'abeilles et unifiant les segments de nid d'abeilles par collage,
dans lequel
(iv) une phase vitreuse
est contenue dans lesdites parois extérieures,
dans lequel ladite phase vitreuse est agencée sous la forme d'une strate.

3. Corps à structure en nid d'abeilles selon la revendication 1 ou la revendication 2, dans lequel les cellules prédéterminées sont obturées.

4. Corps à structure en nid d'abeilles selon l'une quelconque des revendications 1 à 3, dans lequel un catalyseur est supporté sur celui-ci.
